# EUROPEAN PATENT SPECIFICATION

(11) **EP 1 261 447 B1**
(45) Date of publication and mention of the grant of the patent: **13.12.2006**
(21) Application number: 01910116.1
(22) Date of filing: 05.03.2001
(51) Int. Cl.: B22F 3/11

(54) **HOLLOW FULLERENE-LIKE NANOPARTICLES AS SOLID LUBRICANTS IN COMPOSITE METAL MATRICES**
HOHLE FULLEREN-ARTIGE NANOPARTIKEL ALS FESTE SCHMIERMITTEL IN VERBUNDMETALLMATRIZEN
NANOPARTICULES CREUSES DU TYPE FULLERENE, UTILISEES COMME LUBRIFIANTS SOLIDES DANS DES MATRICES METALLIQUES COMPOSITES

(30) Priority: 06.03.2000 IL 13489200
(43) Date of publication of application: 04.12.2002
(73) Proprietor: YEDA RESEARCH AND DEVELOPMENT COMPANY, LTD., 76 100 Rehovot (IL); Holon Academic Institute of Technology, 58102 Holon (IL)
(72) Inventor: TENNE, Reshef, 76231 Rehovot (IL); RAPOPORT, Lev, 71402 Lod (IL); LVOVSKY, Mark, 46275 Herzliya (IL); FELDMAN, Yishay, 77391 Ashdod (IL); LESHCHINSKY, Volf, 75297 Rishon Letzion (IL)
(74) Representative: Vossius & Partner
(86) International application number: PCT/IL2001/000204
(87) International publication number: WO 2001/066676

(56) References cited:
- WO-A-97/44278
- WO-A-99/44955
- DATABASE CA [Online] CHEMICAL ABSTRACTS SERVICE, COLUMBUS, OHIO, US; RAPOPORT, L. ET AL: "The effect of hollow nanoparticles of WS2 on friction and wear" retrieved from STN Database accession no. 131:202004 XP002183577 & TRIBOL. SER. (1999), 36(LUBRICATION AT THE FRONTIER), 567-573 ,

## Description

This invention relates to solid lubricants for metals, metal alloys and semiconducting materials. The invention is particularly useful in applications such as automotive transport, aircraft industry, space technology or ultra-high vacuum.

Following carbon fullerenes and carbon nanotubes (Iijima S, Helical microtubules of graphitic carbon, *Nature* 354, 56-58 (1991); Kroto HW, et al., C₆₀: Buckminsterfullerene, *Nature* 318, 162-163 (1985)) hollow nanoparticles and nanotubes of metal dichalcogenides; boron-carbides and other layered compounds have been synthesized as a single phase in recent years (Chopra NG, et al., Boron nitride nanotubes, *Science,* 269, 966-967 (1995); Feldman Y., et al., High-rate, gas-phase growth of MoS₂ nested inorganic fullerenes and nanotubes, *Science, 267,* 222-225 (1995); Rothschild A, et al., The growth of WS₂ nanotubes phases *J*. *Am. Chem. Soc,* 122, 5169-5179 (2000); Tenne R, et al., Polyhedral and Cylindrical Structures of WS₂. *Nature* 360: 444-445 (1992)). These materials were designated under the generic name inorganic fullerene-like materials *(IF).*

The tribological properties of solid lubricants such as graphite and the metal dichalcogenides MX₂ (where M is molybdenum or tungsten and X is sulphur or selenium) are of technological interest for reducing wear in circumstances where liquid lubricants are impractical, such as in space technology, ultra-high vacuum or automotive transport. These materials are characterized by weak interatomic interactions (van der Waals forces) between their layered structures, allowing easy, low-strength shearing.

Solid lubricants are required to have certain properties, such as low surface energy, high chemical stability, weak intermolecular bonding, good transfer film forming capability and high load bearing capacity. Conventional solid lubricants such as MoS₂ particles, graphite, and polytetrafluoroethylene (PTFE) have weak interlayer bonding which facilitate transfer of said materials to the mating surface. Such transfer films are partially responsible for low friction and wear.

The use of metal dichalcogenides and MoS₂ particles as solid lubricants in various applications, is well documented ( Singer IL, in *Fundamentals of Friction: Macroscopic and Microscopic Processes* (eds. 3. Singer IL and Pollock HM), p. 237 (Kluwer, Dordrecht, 1992)). Recently, the tribological applications of hollow nanoparticles of WS₂ as an additive for lubrication fluids, has also been demonstrated (Rapoport L, et al., Hollow nanoparticles of WS₂ as potential solid-state lubricants, *Nature,* 387, 791-793 (1997).

It is an object of the present invention to develop new composites of metal, metal alloy or semiconducting material, providing high durability and mechanical strength.

The above object is achieved by the present invention, which provides new composite materials for use to reduce friction coefficient and wear rates and for increasing the load bearing capacity of parts made of such materials. The new composite materials of the invention is defined in claim 1 and comprises a porous matrix made of metal, metal alloy or semiconducting material and hollow fullerene-like nanoparticles (IF) of a metal chalcogenide compound or mixture of such compounds, said composite materials having a porosity between 10% and 40%.

The present invention also provides a method for preparing the new composite materials of the invention.

The *IF* nanoparticles used in the composite materials of the invention have a diameter between about 10 and about 200 nm. In view of their small sizes, these nanoparticles can be impregnated into highly densified matrices.

Without being bound to theory, it is suggested that the *IF* nanoparticles are impregnated into the pores of the porous matrix and are slowly released to the surface, where they serve as both lubricant and spacer. The behavior of *IF* nanoparticles is compared hereinafter with commercially available WS₂ and MoS₂ platelets with 2H polytype structure (2H).

In order to understand the invention and to see how it may be carried out in practice, a preferred embodiment will now be described, by way of non-limiting example only, with reference to the accompanying drawings, in which:
**Figs. 1A and 1B** illustrate, respectively, a SEM image of the sintered bronze-graphite block with 2H-WS₂ platelets, and a SEM image of the sintered bronze-graphite block with *IF-* WS₂nanoparticles;
**Fig. 2** is a graphical illustration of the dependences of the friction coefficient and temperature on the load exerted on bronze-graphite; bronze-graphite impregnated with 2H-WS₂ and *IF-* WS₂ nanoparticles.
**Fig. 3** is a graphical illustration of roughness of the surfaces of 4 bronze-graphite samples (virgin, with oil, with oil and 2H-WS₂ and oil with *IF-*WS₂ nanoparticles) after friction under load of 30 kg and sliding velocity of 1 m/s;
**Fig.4** is a graphical illustration of the friction coefficient of bronze-graphite composites as a function of the PV parameter with oil and oil + *IF-* WS₂ (3.2 wt. %) nanoparticles;
**Fig.5** illustrates a SEM image of the surface of powdered bronze-graphite block impregnated with oil + *IF* after the test under PV = 5200;
**Fig.6** is a graphical illustration of the correlation between the friction coefficient and the load for iron-nickel-graphite block impregnated with 2H-WS₂, 6.5 wt% and *IF*-WS₂, 6.5 and 8.4 wt%, after oil drying;
**Fig. 7** is a graphical illustration of the correlation between friction coefficient and the load for iron-graphite block impregnated with 2H- WS₂ (5 wt. %) and *IF*-WS₂ (4.5 wt %).) after oil drying.

The present invention provides a new composite material comprising a porous matrix made of metal, metal alloy or semiconducting material and hollow fullerene-like nanoparticles of a metal chalcogenide compound or mixture of such compounds. The composite material is characterized by having a porosity between 10% and 40%. The amount of the hollow nanoparticles in the composite material is 1-20 wt%.

It is suggested that the pores of the matrix serve as a reservoir for the *IF* nanoparticles, which are slowly furnished to the metal surface providing low friction, low wear-rate and high critical load of seizure in comparison to 2H particles. Most likely, the main favorable contributions of the *IF* nanoparticles stem from the following three effects: a. rolling friction; b. the hollow nanoparticles serve as spacer, which eliminate metal to metal contact; c. third body material transfer, i.e. layers of nanoparticles are transferred from time to time from the nanoparticles onto the metal surfaces and they provide a reduced sliding friction between the matting metal surfaces.

Hollow fullerene-like nanoparticles are preferably made of WS₂, MoS₂ or mixtures thereof. They can be made as small as needed and they possess a non-reactive surface and therefore they can be easily impregnated into the matrix. Since the size of the synthesized *IF* nanoparticles can be varied between 10 and 200nm, the relationship between the pores and the nanoparticle sizes can be varied according to the application.

At times, the fullerene-like nanoparticles are mixed with an organic fluid or mixture of organic fluids such as oil, molten wax, etc. prior to adding them to the porous matrix.

The porous matrix is made of a metal, metal alloy or semiconducting material, for example copper and copper-based alloys, iron, and iron-based alloys, titanium and titanium-based alloys, nickel-based alloys, silicon and aluminum.

Numerous applications for the IF nanoparticles in reducing friction and wear can be envisaged. Such an application is for example in sliding bearings.

Sliding bearing are routinely used in places where ball-bearings are prohibitive due to weight saving considerations, like car and other automotive engines, transmission systems, pumps, aerospace and numerous other applications. Unfortunately, the friction losses of sliding bearings are bigger than those found for ball bearings. The composite of the invention combines the advantages of the two technologies. Here, the hollow nanoparticles serve as nanoball bearings and thereby reduce frictions to levels comparable with those found in ball bearings, but with the additional weight savings benefit typical of sliding bearings and without sacrificing the mechanical properties of the metal part.

The growth mechanism of WS₂ fullerene-like nanoparticles has been described in the literature, see for example Y. Feldman et al., J. Am. Chem. Soc. 1998, 120, 4176. The reaction is carried out in a fluidized bed reactor, where H₂S and H₂ react with WO₃ nanoparticles at 850°C. A closed WS₂ monoatomic layer is formed instantaneously and the core of the nanoparticle is being reduced to WO₃₋ₓ. The enfolding sulfide layer prevents the sintering of the nanoparticles. In the ensuing step, sulfur diffuses slowly into the oxide core and reacts with the oxide. The oxygen atoms out diffuse and progressively closed WS₂ layers replace the entire oxide core. After a few hours reaction, nested and hollow WS₂ nanoparticles of a diameter ≤200 nm are obtained.

The method of preparing the composite materials of the invention comprises the following steps:
i. preparing a porous matrix by mixing the precursor material for the desired matrix with foaming agents and compaction;
ii. volatilizing the foaming agents under a temperature of about 500°C and sintering the matrix obtained under a temperature between 700 and 2000°C;
iii. heating said matrix to a temperature between about 20°C to about 150°C under vacuum;
iv. exposing the matrix obtained in step iii above to a source material of hollow nanoparticles of a metal chalcogenide compound or mixture of such compounds in a carrier fluid under vacuum to obtain a composite comprising of said porous matrix impregnated with hollow nanoparticles of a metal chalcogenide or mixture of metal chalcogenides; and
v. optionally drying the impregnated porous matrix obtained in step iv to eliminate the organic fluid whenever this fluid is undesireable.

More specifically, the porous matrix used in step i above is produced by introducing organic materials such as foaming agents into a powder of the desired metal or metal alloy and then heating the obtained mixture. The heating cycle includes: volatilizing the organic materials , i.e. the foaming agents, and sintering of the mixture . The foaming agents were evaporated during the sintering step, by heating the matrix to about 500°C for 30 min. The sintering was carried out under a protective hydrogen atmosphere at a temperature of between 500° and 2000° C, according to the metal or metal alloy powders used. By this procedure, different matrices were obtained with various values ofporosity (30-60%).

In the next step, the porous matrix obtained is exposed to a source material of hollow nanoparticles of a metal chalcogenide compound or mixture of such compounds. *IF-* WS₂ or MoS₂ nanoparticles, with a diameter of between 10 and 200 nm were applied as solid lubricants. For comparison tests, WS₂ and MoS₂ particles (2H) with average size close to 4 µm were applied as solid lubricants. A well mixed suspension of an organic fluid such as a mineral oil, wax, etc and the solid lubricant ( content of 10-15%) was vacuum impregnated into the porous materials at a temperature range of 20-150°C. For comparison tests, some of the samples were oil dried after impregnation.

The impregnated porous matrix obtained is optionally dried to achieve a controlled amount of carrier fluid with hollow nanoparticles in the matrix. The matrix obtained has a porosity of 10-40%. When desired, the matrix may optionally be repressed.

The invention will now be further described by the following non-limiting examples.

### Example 1

Some metal powders, providing low friction (used in self-lubricating sliding bearings like bronze, bronze-graphite, ferrous-graphite and other alloys and composites), were agitated with low melting point organic materials, like carbomethyl cellulose, which contribute to the pore formation and then were pressed in cold state. In this case the samples of bronze-graphite were sintered in hydrogen atmosphere at 750°C. Subsequently, oil impregnated with 2H-WS₂ and *IF*-WS₂ nanoparticles were carried-out into the porous metal matrixes in vacuum. Afterwards, the samples were dried at 100°C in order to exclude the lubricant and other additives. Finally, the samples were repressed up to a porosity of 25-30%. The composition of the metal powder is as follows: Cu-86.4%; Sn-9.6%; graphite-4%.

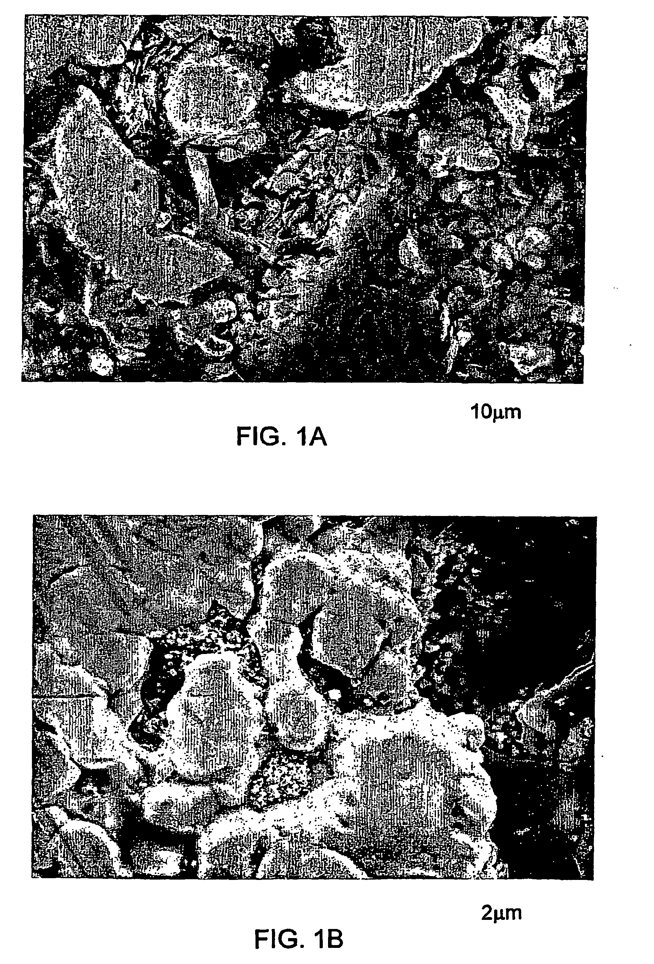

**Figs. 1A and 1B** show images of metal surfaces acquired with a Scanning Electron Microscope (SEM). Fig. 1A is the SEM image of a sintered bronze-graphite block with 2H-WS₂ platelets. Most of the platelets are standing edge-on, "glued" to the metal surface through their reactive prismatic (10 0) faces (shown by arrows). SEM analysis showed a non-uniform distribution of the 2H platelets on the surface of the metal matrix. The sticking ("gluing") of the prismatic edges of the 2H platelets to the metal surface averts their permeation deep into the metal piece and leads to their accumulation at the metal surface. In accordance with the results of this experiment their tribological effect is expected to deteriorate faster with time. Contrarily, the *IF-* WS₂ nanoparticles are distributed quite randomly in the porous metal matrix (Fig. 1B).., The slippery nature of the *IF* nanoparticles is appeared to lead to their random distribution in the porous metal matrix, usually as agglomerates. These softly bonded agglomerates decompose easily into separate *IF* nanoparticles under light load. EDS analysis confirmes the presence of *IF* nanoparticles inside the pores.

### Example 2

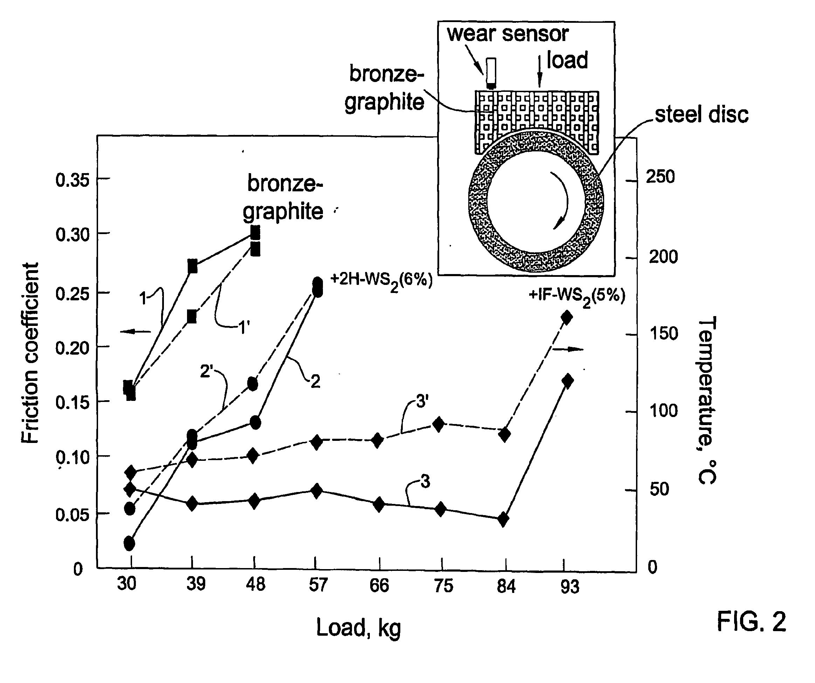

**Fig 2** illustrates the effect of load (in kg) on friction coefficient (1,2,3) and temperature (1',2',3') of oil-dried porous bronze-graphite block against hardened steel disk (HRC 52). In these experiments, after a run-in period of 10-30 hours, the samples were tested under a load of 30 kg and sliding velocity of 1m/s for 11hr. Subsequently, the loads were increased from 30kg with an increment of 9kg and remained 1hr under each load. (1,1') reference sample; (2,2') matrix with 2H-WS₂ (6 wt. %) (3,3') matrix with (5 wt %) *IF*- WS₂ nanoparticles. The average roughness (Ra) values (in µm) were: virgin surfaces- 2; bronze-graphite+2H-WS₂ platelets -0.28; bronze-graphite+*IF*-WS₂ nanoparticles- 0.75.

For low loads, all the sintered samples exhibit relatively low friction coefficient. As the load increases beyond a certain critical value, the friction coefficient and temperature increase abruptly, signifying the seizure of the friction pair.

The following values of wear coefficients were obtained under load of 30 kg and sliding velocity of 1 m/s: the wear coefficient (Kw[mm³/mm●N●10⁻¹⁰]) was 8.9,3.3,and 2 for bronze-graphite, bronze-graphite with 2H-WS₂ and bronze-graphite with *IF-* WS₂ nanoparticles, respectively.

Most remarkably, while the 2H-WS₂ platelets increase the critical load rather modestly, the *IF*- WS₂ nanoparticles increase this point from ca. 35 kg to 85 kg. SEM micrographs taken after these tests showed, that the surface of sintered material did not change dramatically following the experiment with the nanoparticles, and the virgin pores are mainly preserved on the contact surface. Furthermore, the spherical nanoparticles can be easily discerned within the pores. On the other hand, the surface of the reference bronze-graphite block or with 2H-WS₂ particles added, suffered severe wear. In this case, the surface became rather smooth as a result of the transfer of wear debris into the pores. A tip profiler was used to examine the surface roughness before and after the tribological tests.

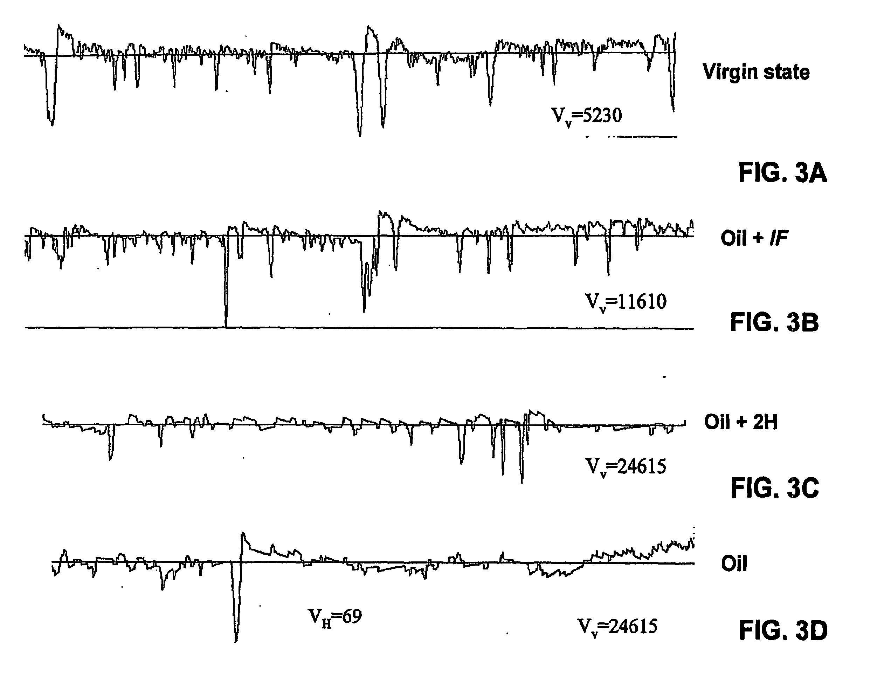

The results of this analysis are summarized in **Fig. 3**, and they confirm the SEM observations. Using energy dispersive X-ray analysis (EDS), severe oxidation of the wear metal was found for the wear surfaces, while the nanoparticles-containing composite remained mostly unoxidized.

A similar experiment was performed with MoS₂ nanoparticles used as solid lubricant. The experiment was carried out according to the same procedure of Example 2. The friction coefficient in the steady friction sate was 0.035 for the *IF*-MoS₂ and 2H-MoS₂ impregnated samples. The critical load for the transition to seizure was higher for the *IF*-MoS₂ than for the *IF*-WS₂ sample and was 120 kg.

### Example 3

In another series of experiments, the lifetime of the metal piece with and without the solid lubricant was compared under relatively harsh conditions. After a run-in period similar to the one used in the previous experiments, the load was gradually increased to 60 kg at sliding velocity of 1m/s. The lifetime of the metal piece containing 6 wt. % of 2H-WS₂ platelets was found to be less than one hour before seizure took place. Under the same conditions, the metal piece containing 5 wt. % *IF*-WS₂ survived for 18 hours before seizure, i.e. 20 times improvement in the lifetime of the metal piece. The dry metal-piece seized before this load could be reached (after the run-in period). These results are consistent with the previous results and they allude to the substantial gains in lifetime of metal pieces impregnated with such tiny amount of the hollow nanoparticles.

### Example 4

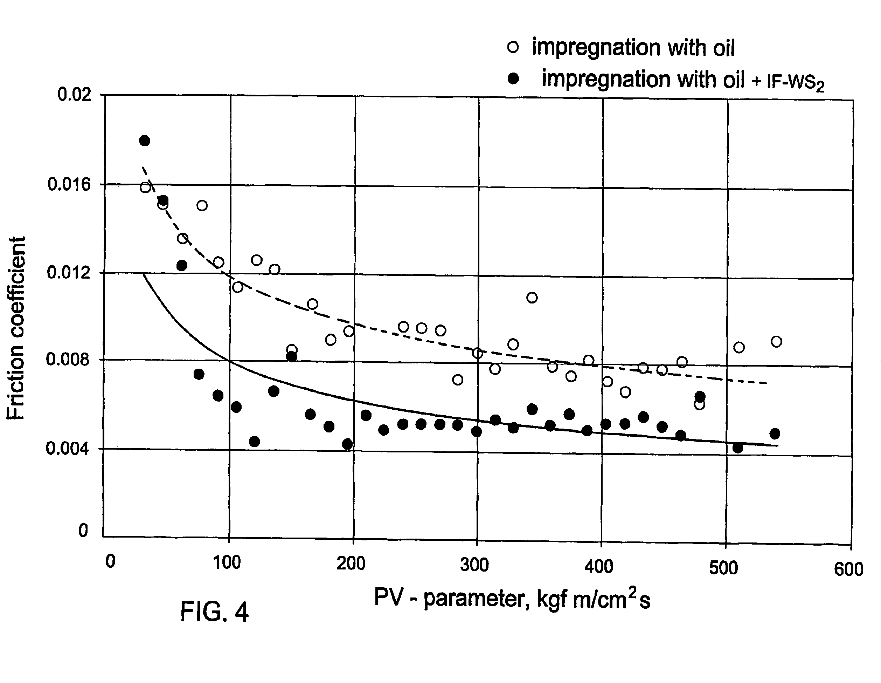

Bronze composites were chosen for this experiment. In this case the friction and wear behavior of the well-known oil-impregnated bronze was compared with the samples impregnated with oil + solid lubricant suspensions. A well mixed suspension of mineral oil with the solid lubricant was vacuum impregnated into the porous materials. The quantity of the solid lubricant impregnated into the porous matrix was 3.2 wt. %. The final value of the matrix porosity was about 27-30 %. The tests were performed at laboratory atmosphere (~50 % humidity) using a ring-block tester at loads of 150-3000 N. The sliding speed was changed every half an hour in steps of 0.2 m/s from 0.5 to 1.7 m/s under a definite load. Then, the cycle of increasing sliding speed was repeated under the next load. The load was increased by steps of 150 N. All the experimental points measured were presented as PV parameter, i.e. pressure x velocity. **Fig.4** shows the friction coefficient of the metal matrix as a function of the PV parameter of the metal piece with and without the addition of the fullerene-like WS₂ nanoparticles.

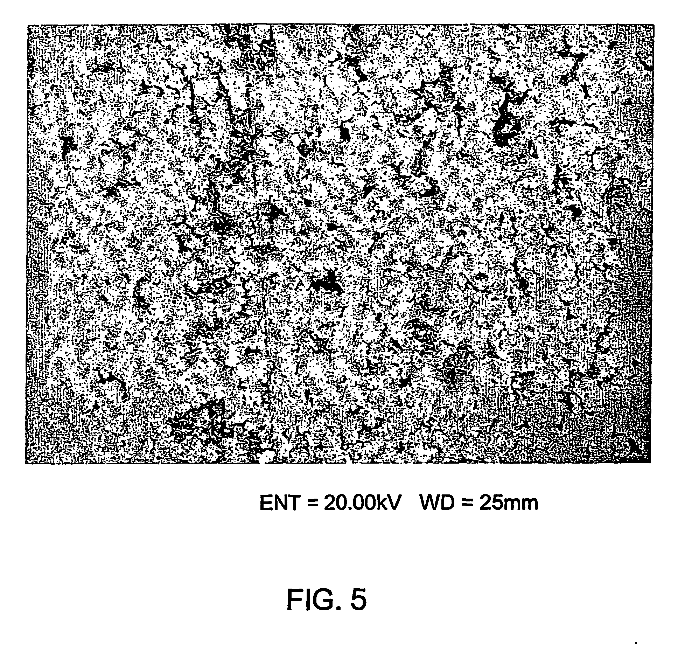

The addition of the *IF* nanoparticles to the oil leads to a decrease of the friction coefficient by 30-50 % as compared to the oil impregnated surfaces. The average values of the friction coefficient for samples with oil and oil+*IF* were 0.009 and 0.005, respectively. The powdered block with oil+*IF* suspension showed very high load bearing capacity, PV> 5200 Nm/(cm²s). **Fig.5** shows the surface of block impregnated with oil + *IF* after the test under PV = 5200. The porous surface without the ploughing and adhered wear particles testifies good friction conditions.

### Example 5

This example describes the sintering of iron-nickel-graphite powdered samples impregnated with *IF* nanoparticles after oil drying and their tribological properties.

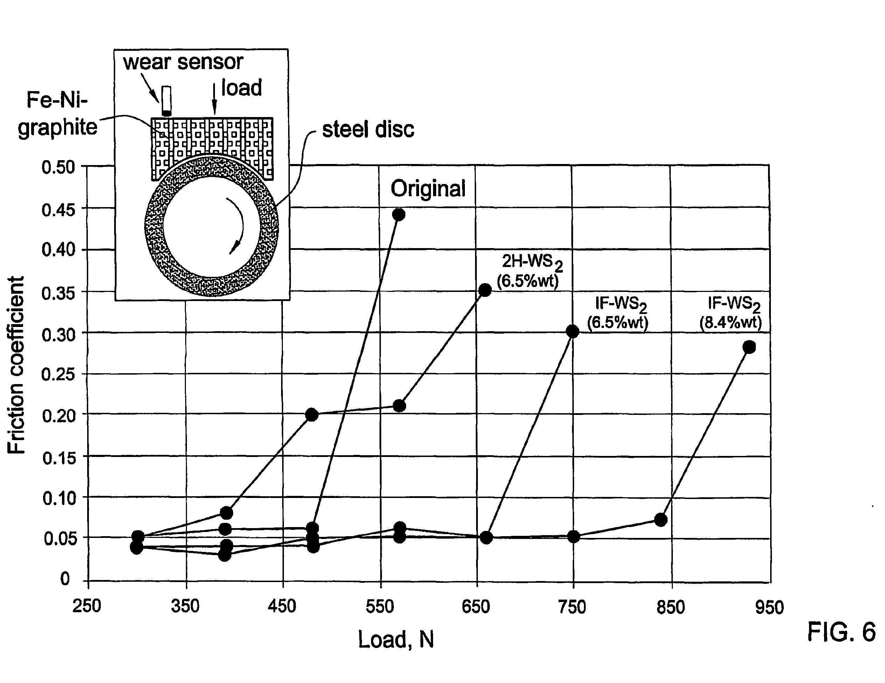

Sintering of the specimens was carried out in a protective hydrogen atmosphere at a temperature of 1050° C. The amount of the solid lubricant impregnated into the porous matrix was changed form 6.5 wt % to 8.4 wt %. After impregnation of the *IF* nanoparticles suspended in oil, the sample was heated to 150°C for 2 hr in order to remove the excess oil from the metal matrix. The transition to seizure was evaluated in this experiment. The friction and wear test were similar to that described in the example 1. Beyond a certain critical load, the friction coefficient and temperature increased abruptly, signifying the transition to seizure of the mating metal pair. The dependences of the friction coefficient on the load for iron-nickel-graphite block impregnated with oil, oil + 2H and oil + *IF* are presented in **Fig.6.** It is seen that the impregnation of *IF* nanoparticles improves the tribological properties in comparison to the known additives (2H-WS₂ and 2H-MoS₂).

### Example 6

This example describes the sintering of iron-graphite powdered samples impregnated with *IF* nanoparticles and their tribological properties.

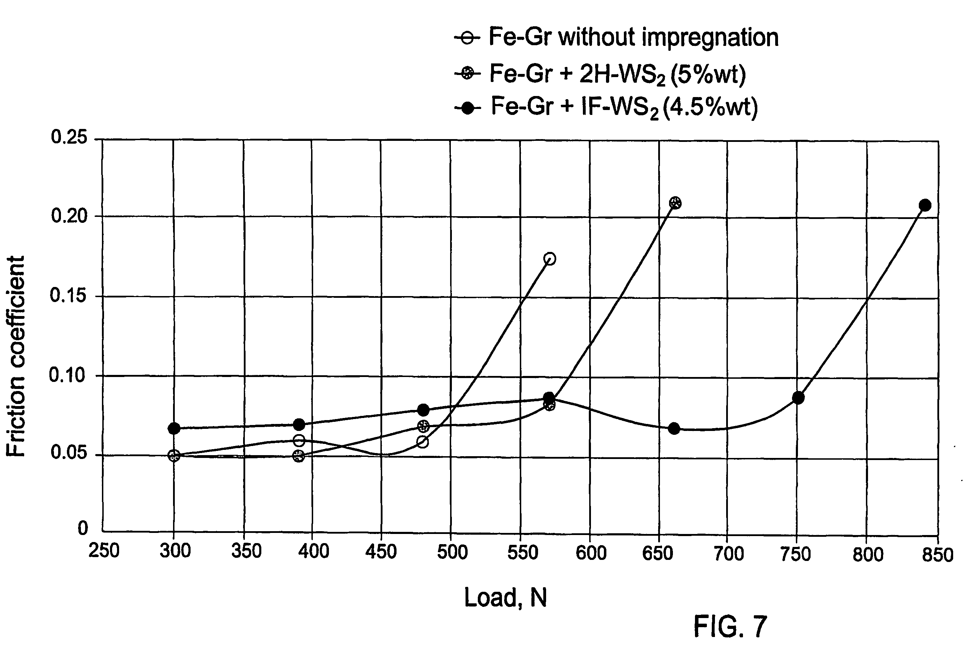

Sintering and preparation of the sample to the tribological tests was similar to example 1. The transition to seizure was evaluated in this experiment. The friction and wear tests were similar to that described in the example 1. Beyond a certain critical load, the friction coefficient and temperature increased abruptly, signifying the transition to seizure of the mating metal pair. The dependences of the friction coefficient on the load for iron-nickel-graphite block impregnated with oil, oil + 2H (5 wt. %) and oil + *IF (4.5 wt.* %) are presented in **Fig.7**. It is seen that the impregnation of *IF* nanoparticles improves the tribological properties in comparison to known additives.

### Example 7

This example concerns the impregnation of *IF* nanoparticles with a molten paraffin wax into the porous matrix of bronze-graphite sample and the tribological measurements of this sample. Sintering and preparation of the sample and the tribological tests were similar to examples 1, 2. The results are presented in Table 1.

**Table 1:**

| | Friction coefficient, *f* | Wear coefficient, 10⁻¹¹, mm³ /mm N | Critical load, P, N |
|---|---|---|---|
| Paraffin wax | 0.017 | 22.9 | 660 |
| Paraffin wax + 2H | 0.01 | 14.6 | 1020 |
| Paraffin wax *+ IF* | 0.007 | 13.4 | 1380 |

It may be seen that addition of paraffin wax into the porous matrix provides a very low friction coefficient in comparison to the sample with *IF* nanoparticles impregnated after oil drying (*f* = 0.05). The critical load of transition to seizure for the sample with paraffin wax+*IF* (P=1380 N) is substentially higher than for oil-dried sample with *IF* nanoparticles (P = 850 N).

### Example 8

A porous silicon substrate was prepared by anodizing Sb doped Si (n-type) wafer for 40 min in HF/H₂O mixture of 10% under illumination of quartz halogen lamp (80 mW/cm²) which produced an anodic current of 15 mA/cm². The anodized wafer was flushed and dipped into KOH solution (1 M) in order to dissolve the nanoporous film and leave the macroporous top surface exposed to the outer surface. The treated Si wafer was examined by scanning electron microscope (SEM) and was found to include a dense pattern of pores with cross-section diameter of between 0.1-1 micron. By cleaving the Si wafer, the porous layer was found to extend to about 10 micron deep. This means that the top surface of the porous Si can be regarded as a suitable host to the nanoparticles of the fullerene-like material and substantial reduction in friction could be anticipated. Since, the depth of the pores could be determined essentially through the electrochemical parameters of the reaction; the host structure could be extended to anywhere between 0.5 micron to 100 micron and more.

The Si wafer (1x0.5 cm²) sample was placed in the disc-block tester and the tribological parameters were measured under a load of 20 kg and a velocity of 0.4 m/s. A stainless steel disc was used for these measurements. When the dry Si was tested, a friction coefficient of 0.24 was measured. When mineral oil was added between the Si wafer and the metal disc, the friction coefficient went down to 0.108. Then mineral oil with 2% of the IF-WS₂ was used as a lubricant instead of the pure oil. After a short run-in period, a friction coefficient of 0.03 was obtained. After the measurements, the Si wafer was examined by a SEM and a black powder chemically identified as WS₂ was found by EDS analysis in the macropores of the Si wafer. This shows that during the run-in period, the fullerene-like nanoparticles were inserted into the pores of the porous Si, as was further confirmed by a careful transmission electron microscopy analysis.

### Example 9

Porous aluminium membrane with pore diameters of between 0.05-0.5 micron was purchased. Alternatively, an aluminum foil was anodized in HF/H₂O mixture (10%) and a porous aluminium membrane with similar porosity was obtained. Measurements analogous to Example 4 were performed with these porous samples. Very high friction coefficients (>0.4) were determined with the dry aluminium membrane surface. By adding the oil, the friction coefficient went down to 0.14 and by adding 2% of the fullerene-like WS₂ (*IF-*WS₂) nanoparticles, a friction coefficient of 0.012 was obtained after a short run-in period. As for the case of Example 4, the *IF*-WS₂ nanoparticles were found to accumulate in the pores of the aluminium membrane and alleviate the high friction of the sample surface. The wear coefficient was measured as well. It went down by a factor of 25 between the surface lubricated with pure oil and that lubricated by pure oil and 2% *IF* material. These results indicate the life expectancy of the two surfaces. The wear coefficient of the dry sample could not be measured since this is a brittle material and it deteriorates after a very short period of loading.

## Claims

1. A composite material having a porosity between 10% and 40% comprising:
i) a porous matrix made of metal, metal alloy or semiconducting material; and
ii) hollow fullerene-like nanoparticles of a metal chalcogenide compound or mixture of such compounds, wherein said nanoparticles are impregnated into the pores of said porous matrix.

2. A composite according to claim 1, wherein said hollow nanoparticles are made of WS₂, MoS₂ or mixtures thereof.

3. A composite according to claim 2, wherein the diameter of said nanoparticles is between 10 and 200 nm.

4. A composite according to any one of the preceding claims wherein the amount of the hollow nanoparticles in said matrix is between 1% and 20 wt. %.

5. A composite according to claim 1, wherein the fullerene-like nanoparticles are mixed with an organic carrier fluid or mixture of organic carrier fluids.

6. A composite according to claim 1, wherein the fullerene-like nanoparticles are mixed with an oil or mixture of oils as carrier fluid.

7. A composite according to claim 1 wherein said porous matrix is selected from the group consisting of copper, and copper-based alloys, iron, and iron-based alloys, titanium and titanium-based alloys, nickel-based, alloys, silicon, and aluminium.

8. A composite according to claim 7, wherein the porous matrix is a doped silicon substrate anodized in HF containing solutions.

9. A composite according to claim 7, wherein the porous matrix is an aluminum foil anodized in acidic solution.

10. A composite according to any one of the preceding claims for use in reducing friction coefficient and wear rates and increasing the load bearing capacity of articles manufactured from such composite.

11. A method of preparing a composite material as defined in claim 1, the method comprising the following steps:
i. preparing a porous matrix by mixing the precursor material for the desired matrix with foaming agents and compaction;
ii. volatilizing the foaming agents under a temperature of about 500°C and sintering the matrix obtained under a temperature between 700 and 2000°C;
iii. heating said matrix to a temperature between 20°C to 150°C under vacuum;
iv. exposing the matrix obtained in step iii above to a source material of hollow nanoparticles of a metal chalcogenide compound or mixture of such compounds in a carrier fluid under vacuum to obtain a composite comprising of said porous matrix impregnated with hollow nanoparticles of a metal chalcogenide or mixture of metal chalcogenides; and
v. optionally drying the impregnated porous matrix obtained in step iv to eliminate the organic fluid whenever this fluid is undesireable.

12. A method according to Claim 11, wherein the amount of the hollow nanoparticles in the pores of the matrix is between 1% and 20 wt. %.

13. A method according to claim 11, wherein said nanoparticles are added to said porous matrix in step iv by mixing with 5-30wt% of an organic earner fluid or mixture of organic fluids.

14. A method according to claim 11, wherein said nanoparticles are added to said porous matrix in step iv by mixing with 5-30wt% of a carrier oil or mixture of oils.

15. A method according to claim 11, wherein said nanoparticles are added to said porous matrix in step iv by mixing with a molten wax.

## Patentansprüche

1. Verbundstoffmaterial mit einer Porosität zwischen 10% und 40%, umfassend:
i) eine aus einem Metall, einer Metalllegierung oder einem halbleitenden Material hergestellte poröse Matrix; und
ii) hohle Fulleren-artige Nanoteilchen aus einer Metallchalcogenidverbindung oder einem Gemisch solcher Verbindungen, wobei die Nanoteilchen in die Poren der porösen Matrix imprägniert sind.

2. Verbundstoff gemäß Anspruch 1, wobei die hohlen Nanoteilchen aus WS₂, MoS₂ oder Gemischen davon hergestellt sind.

3. Verbundstoff gemäß Anspruch 2, wobei der Durchmesser der Nanoteilchen zwischen 10 und 200 nm liegt.

4. Verbundstoff gemäß einem der vorstehenden Ansprüche, wobei die Menge der hohlen Nanoteilchen in der Matrix zwischen 1 Gew.-% und 20 Gew.-% beträgt.

5. Verbundstoff gemäß Anspruch 1, wobei die Fulleren-artigen Nanoteilchen mit einer organischen Trägerflüssigkeit oder einem Gemisch organischer Trägerflüssigkeiten gemischt sind.

6. Verbundstoff gemäß Anspruch 1, wobei die Fulleren-artigen Nanoteilchen mit einem Öl oder einem Gemisch von Ölen als Trägerflüssigkeit gemischt sind.

7. Verbundstoff gemäß Anspruch 1, wobei die poröse Matrix aus Kupfer und Legierungen auf Kupferbasis, Eisen und Legierungen auf Eisenbasis, Titan und Legierungen auf Titanbasis, Legierungen auf Nickelbasis, Silicium und Aluminium ausgewählt ist.

8. Verbundstoff gemäß Anspruch 7, wobei die poröse Matrix ein dotierter, in HF enthaltenden Lösungen anodisierter Siliciumträger ist.

9. Verbundstoff gemäß Anspruch 7, wobei die poröse Matrix eine in saurer Lösung anodisierte Aluminiumfolie ist.

10. Verbundstoff gemäß einem der vorstehenden Ansprüche zur Verwendung zum Verringern von Reibungskoeffizient und Abnutzungsraten und zum Erhöhen der Tragfähigkeit von Gegenständen, die aus einem solchen Verbundstoff hergestellt sind.

11. Verfahren zum Herstellen eines Verbundstoffmaterials nach Anspruch 1, wobei das Verfahren die folgenden Schritte umfasst:
i) Herstellen einer porösen Matrix durch Mischen eines Vorläufermaterials für die gewünschte Matrix mit Schäumungsmitteln und Kompaktieren;
ii) Verdampfen der Schäumungsmittel bei einer Temperatur von etwa 500°C und Sintern der erhaltenen Matrix bei einer Temperatur zwischen 700 und 2000°C;
iii) Erwärmen der Matrix auf eine Temperatur zwischen 20°C bis 150°C unter Vakuum;
iv) Aussetzen der im vorstehenden Schritt iii) erhaltenden Matrix einem Quellenmaterial für hohle Nanoteilchen einer Metallchalcogenidverbindung oder einem Gemisch solcher Verbindungen in einer Trägerflüssigkeit unter Vakuum, um einen Verbundstoff zu erhalten, umfassend die poröse Matrix imprägniert mit hohlen Nanoteilchen einer Metallchalcogenidverbindung oder einem Gemisch von Metallchalcogeniden; und
v) gegebenenfalls Trocknen der in Schritt iv) erhaltenen imprägnierten porösen Matrix, um die organische Flüssigkeit zu entfernen, wann immer diese Flüssigkeit unerwünscht ist.

12. Verfahren gemäß Anspruch 11, wobei die Menge der hohlen Nanoteilchen in den Poren der Matrix zwischen 1 Gew.-% und 20 Gew.-% beträgt.

13. Verfahren gemäß Anspruch 11, wobei die Nanoteilchen in Schritt iv) zu der porösen Matrix durch Mischen mit 5 bis 30 Gew.-% einer organischen Trägerflüssigkeit oder einem Gemisch organischer Flüssigkeiten zugegeben werden.

14. Verfahren gemäß Anspruch 11, wobei die Nanoteilchen in Schritt iv) zu der porösen Matrix durch Mischen mit 5 bis 30 Gew.-% eines Ölträgers oder Gemisch von Ölen zugegeben werden.

15. Verfahren gemäß Anspruch 11, wobei die Nanoteilchen in Schritt iv) zu der porösen Matrix durch Mischen mit einem geschmolzenen Wachs zugegeben werden.

## Revendications

1. Matériau composite ayant une porosité entre 10 % et 40 % comprenant :
i) une matrice poreuse faite de métal, alliage de métal ou matériau semiconducteur ; et
ii) des nanoparticules du type fullerène creuses d'un composé chalcogénure métallique ou un mélange de tels composés,
dans lequel lesdites nanoparticules sont imprégnées dans les pores de ladite matrice poreuse.

2. Composite selon la revendication 1, dans lequel lesdites nanoparticules creuses sont faites de WS₂, MoS₂ ou de mélanges de ceux-ci.

3. Composite selon la revendication 2, dans lequel le diamètre desdites nanoparticules est entre 10 et 200 nm.

4. Composite selon l'une quelconque des revendications précédentes, dans lequel la quantité des nanoparticules creuses dans ladite matrice est entre 1 % et 20 % en poids.

5. Composite selon la revendication 1, dans lequel les nanoparticules de type fullerène sont mélangées avec un fluide support organique ou un mélange de fluides supports organiques.

6. Composite selon la revendication 1, dans lequel les nanoparticules de type fullerène sont mélangées avec une huile ou un mélange d'huiles en tant que fluide support.

7. Composite selon la revendication 1, dans lequel ladite matrice poreuse est choisie dans le groupe constitué de cuivre, et d'alliages à base de cuivre, de fer, et d'alliages à base de fer, de titane et d'alliages à base de titane, d'alliages à base de nickel, de silicone et d'aluminium.

8. Composite selon la revendication 7, dans lequel la matrice poreuse est un substrat siliconé dopé anodisé dans des solutions contenant du HF.

9. Composite selon la revendication 7, dans lequel la matrice poreuse est une feuille d'aluminium anodisée en solution acide.

10. Composite selon l'une quelconque des revendications précédentes, destiné à être utilisé dans la réduction du coefficient de friction et des taux d'usure et à augmenter la capacité de chargement d'articles fabriqués à partir d'un tel composite.

11. Procédé pour préparer un matériau composite tel que défini dans la revendication 1, le procédé comprenant les étapes suivantes :
i. préparer une matrice poreuse en mélangeant le matériau précurseur de la matrice souhaitée avec des agents moussants et compaction ;
ii. volatiliser les agents moussants à une température d'environ 500°C et fritter la matrice obtenue à une température entre 700 et 2000°C ;
iii. chauffer ladite matrice à une température entre 20°C et 150°C sous vide ;
iv. exposer la matrice obtenue à l'étape iii ci-dessus à un matériau source de nanoparticules creuses d'un composé chalcogénure métallique ou un mélange de tels composés dans un fluide support sous vide pour obtenir un composite comprenant ladite matrice poreuse imprégnée avec des nanoparticules creuses d'un chalcogénure métallique ou d'un mélange de chalcogénures métalliques ; et
v. éventuellement sécher la matrice poreuse imprégnée obtenue à l'étape iv pour éliminer le fluide organique lorsque ce fluide est indésirable.

12. Procédé selon la revendication 11, dans lequel la quantité des nanoparticules creuses dans les pores de la matrice est entre 1 % et 20 % en poids.

13. Procédé selon la revendication 11, dans lequel lesdites nanoparticules sont ajoutées à ladite matrice poreuse à l'étape iv par mélange avec 5-30 % en poids d'un fluide support organique ou d'un mélange de fluides organiques.

14. Procédé selon la revendication 11, dans lequel lesdites nanoparticules sont ajoutées à ladite matrice poreuse à l'étape iv par mélange avec 5-30 % en poids d'une huile support ou d'un mélange d'huiles.

15. Procédé selon la revendication 11, dans lequel lesdites nanoparticules sont ajoutées à ladite matrice poreuse à l'étape iv par mélange avec une cire fondue.
